# EUROPEAN PATENT SPECIFICATION

(11) **EP 0 477 239 B1**
(45) Date of publication and mention of the grant of the patent: **10.08.1994**
(21) Application number: 90909342.9
(22) Date of filing: 12.06.1990
(51) Int. Cl.: F16L 37/28, B67D 5/02

(54) **CONNECTOR AND DISCONNECTABLE COUPLING ARRANGEMENT FOR A FLUID CONTAINER**
VERBINDER UND LÖSBARE KUPPLUNGSANORDUNG FÜR EINEN FLUIDBEHÄLTER
RACCORD ET AMENAGMENT DE COUPLAGE DETACHABLE POUR RECIPIENT DE LIQUIDES

(30) Priority: 13.06.1989 GB 8913508; 15.09.1989 GB 8920946
(43) Date of publication of application: 01.04.1992
(73) Proprietor: SONOCO LIMITED, Stockport Cheshire SK6 4DY (GB)
(72) Inventor: LEAVER, Allen, Lancashire (GB)
(74) Representative: Linn, Samuel Jonathan
(86) International application number: GB9000904
(87) International publication number: WO9015951

(56) References cited:
- EP-A- 0 108 550
- FR-A- 2 213 702
- US-A- 3 355 143
- US-A- 4 421 296

## Description

### Technical Field

This invention relates to a valved connector for a container for fluid, and to a disconnectable coupling arrangement consisting of such a connector together with a complementary second connector. Such a coupling arrangement is particularly, but not exclusively, useful in connecting a disposable liquid container, e.g. of the type which includes a flexible or elastomeric liquid-containing bag, to liquid dispensing apparatus.

### Background Art

Disposable containers, such as semi-bulk bag-in-box containers (i.e. flexible bags located inside supportive outer casings), which are provided with outlet dispenser fitments for subtantially direct connection to a beverage dispenser machine are already known, for example from prior US specification No. 4700744 and prior UK specification No. 2125129 (=US. 4445539).

In this respect, both prior specifications disclose so-called quick-release (i.e. readily disconnectable) coupling arrangement comprising first and second connectors each having its own shut off valve. Upon connection, the valves of the respective connectors are mutually opened to allow throughflow, whereas upon disconnection, each connector is automatically sealed off by its own valve, thereby preventing contamination and liquid loss.

GB 2125129 in particular discloses a coupling arrangement which includes a first connector, specifically intended for fitting to the outlet of a bag-in-box container, comprising a body having a portion adapted for connection to the container, a portion defining an outward flow passage, and a valve seat, and a valve member resiliently urged towards the valve seat by integral resilient biassing means to prevent fluid flow from the container via the outward flow passage, the valve member also having an actuator portion projecting through the valve seat whereby the valve member can be displaced from the valve seat against the action of the integral biassing means to permit fluid flow therethrough, stop means being provided to limit the displacement of the valve member from the valve seat.

The aforesaid stop means is, in GB 2125129, provided as a stem which is supported centrally within the body by spokes and through which the actuator portion of the valve member projects outwardly of the valve seat.

The object of the invention is to provide an improved connector of the same general type, particularly for use as part of a disconnectable fluid coupling.

### Disclosure of the Invention

According to the present invention such an improved connector is characterised in that the valve member is part of an integrally moulded one piece plastic structure which includes mounting means as well as the resilient biassing means, the actuator position and the stop means.

Provision of the stop means as part of an integral one piece moulding with the valve member has several advantages compared to separate mounting of the stop means in the body or integral formation of the stop means as part of the connector body. Firstly it simplifies the assembly of the connector or the construction of the body, and the construction of the one piece moulding can be kept relatively simple. Secondly, it provides a more reliably operating and more versatile connector in that no matter what shape or size of element is used to displace the valve member the stop means will always limit that displacement at a certain position, whereas in the prior art a thin member would be capable of extending through the stop-defining stem and causing continued displacement. In this respect, a defined limit position for displacement of the valve member is important in ensuring an appropriate rate of fluid throughflow and/or that said valve member will reliably bring about opening of a second valved connector which may be connected thereto as the second part of a coupling.

The invention further provides a disconnectable coupling arrangement comprising a first connector as aforesaid wherein said portion defining an outward flow passage is complementary to a portion, defining an inflow passage, of a second connector, said second connector also comprising a body, of which the aforesaid inflow passage portion forms part, including a valve seat, and a valve member resiliently urged towards the valve seat in a direction to prevent fluid flow out of said body, said valve member having a projection which extends through the valve seat when the member is closed against the seat and which is so arranged that upon engagement of said second connector with the outward flow passage of the first connector it engages the actuator portion of the valve member of the first connector and thereby lifts the valve member of both connectors from their valve seats.

### Brief Description of the Drawings

The invention will be described further, by way of example, with reference to the accompanying drawings in which:
- Fig.1: is a cross section illustrating a preferred practical embodiment of a fluid coupling in accordance with the invention with first and second connectors separated;
- Fig.2: is a cross-section of the first connector along the line 2-2 and in the direction indicated by the arrow in Fig.1;
- Fig.3: is a cross-section of the second connector along the line 3-3 and in the direction indicated by the arrow in Fig.1;
- Fig.4: is view comparable to Fig.1 but showing the two connectors in their engaged condition; and
- Fig.5: is a reduced scale side elevation at right angles compared to Fig.4, showing the exterior of the coupling in closed condition.

### Best Mode of Carrying Out Invention

As illustrated, this exemplary coupling arrangement comprises a first connector 10 suitable for fitting to an annular sleeve at the bag outlet of a bag-in-box container (not shown) and a second connector 30 suitable for connection to a beverage dispensing machine (not shown). It will be appreciated, of course, that the coupling arrangement has other applications and could be adapted, where necessary, for connection to other fluid supply and reception means. Moreover, the first connector 10 could be used separately.

The first connector 10 consists of a hollow body which has a conventional cylindrical portion 11, delimited by a shoulder 12 and by an annular flange 13, for insertion into or over a bag outlet sleeve, until the latter abuts the flange 13 or shoulder 12 respectively. The cylindrical portion 11 communicates via a conduit 14 with a valve chamber 15 wherein a valve seat 16 is provided above a narrow diameter end portion 17 defining an outward flow passage.

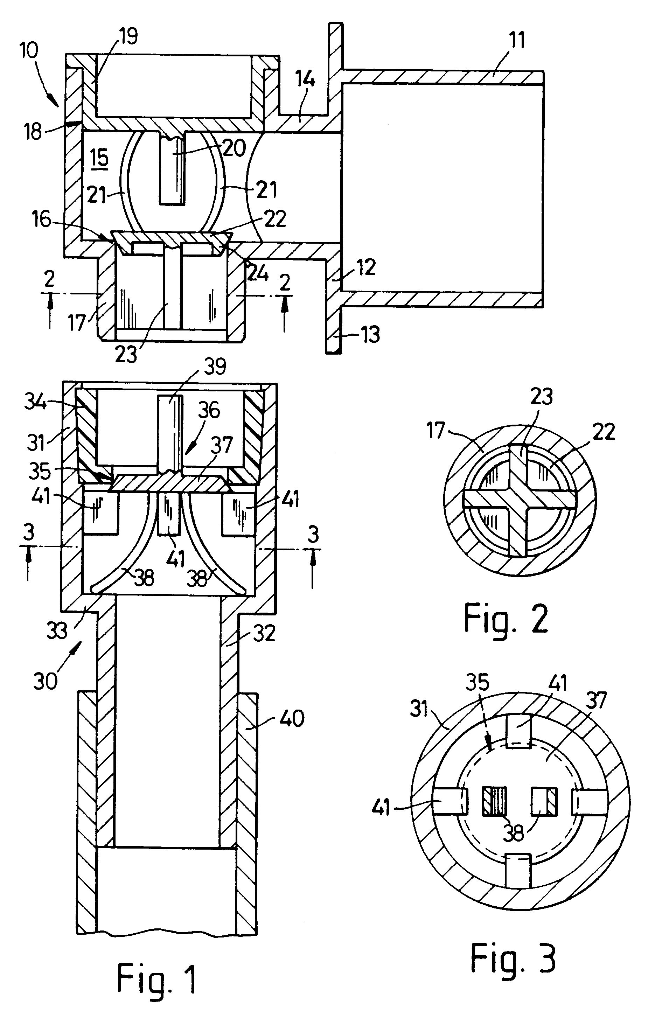

Fitted into the valve chamber 15 is a valve structure which is designated generally by reference numeral 18 and which comprises portions 19 to 23 moulded in one piece of resilient plastics material. Portion 19 is a cup-shaped mounting portion which fits into and closes the end of the valve chamber 15, opposite to the narrow diameter outward flow passage 17, and which may be permanently connected there, e.g. by heat welding. Extending into the valve chamber 15 from the mounting portion 19 is portion 20 which constitutes a central abutment portion and at opposing sides thereof, a pair of flexible arcuate legs 21, which constitute resilient biassing means. A disc-like valve member is carried at the ends of the legs 21, and portion 23 which is a cruciform actuator portion 23 (see Fig.2) projects centrally from the valve member 22..

Normally, the resilience of the legs 21 and pressure of fluid within the chamber 15, the conduit 14 and the connecting portion 11 hold the valve member 22, specifically its thickened and bevelled edge margin 24, in sealing relationship with the seat 16. However, if sufficient pressure is applied in the opposing direction (upwardly in the drawings) to the actuator portion 23 the valve member 22 is lifted and fluid can issue from the outward flow passage 17. In this respect, the cross-shaped cross section of the actuator portion 23 provides four balanced bearing surfaces in sliding contact with the surface of the outflow passage, so that portions 22 and 23 are correctly centred, whilst also providing a sufficient area for fluid flow through passage 17 when the valve member 22 is lifted.

Displacement of the valve member 22 from the valve seat 16 is, of course, delimited by the abutment portion 20.

Containers, such as bag-in-box containers, can be provided with the aforesaid connector 10 so as to adapt them for use within public houses or comparable establishments, as sources of beverage, such as cordial or milk, which have to be passed via pipe lines to dispensers at bars etc. In these circumstances the valve of the connector will be opened upon connection thereto of a pipeline connector, in the manner described hereinafter. On the other hand, the connector 10 can also be used in relation to domestic wine boxes and comparable items for dispensing in the home, in which case another fitting or tool (not shown) needs to be provided to press the actuator 23 and displace the valve member 22 upwards when the user wishes to dispense liquid.

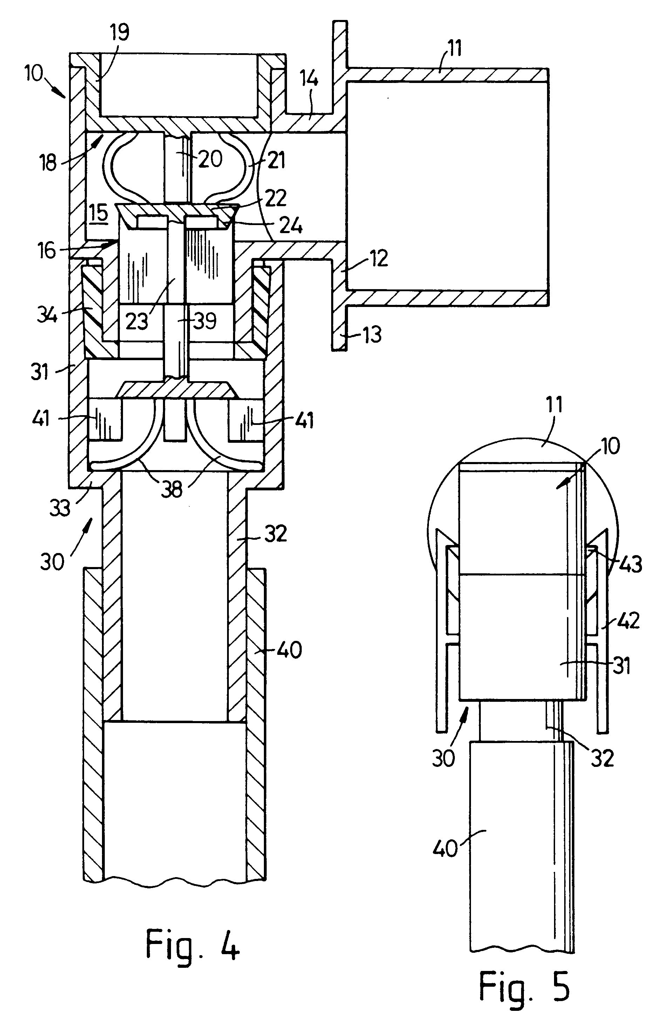

As mentioned, the connector 10 preferably forms part of a coupling arrangement (Figs. 1 and 4) along with a second connector 30, such a coupling arrangement being particularly suitable for use in effecting connection to a pipe 40 through which fluid can be conducted to a bar or comparable dispense point.

The second connector 30 consists of a hollow body with an enlarged diameter end section 31 defining an inflow passage, delimited by a shoulder 33, from a narrow diameter end section 32 which is adapted for connection to the pipe 40. A cup-shaped member 34 is fitted into the inflow passage 31 and provides, at its base, a valve seat 35 defining a central aperture. The cup-shaped member 34 may be a friction fit in the body 30 or may be permanently connected, e.g. welded therein.

A valve structure 36, which consists of portions 37 to 41 moulded in one piece from resilient plastics material, is retained under tension in the inflow passage 31 of the connector 30 behind the cup-shaped member 34. As illustrated, portion 37 consitutes a valve member, which sealingly abuts the valve seat 35 to close the aperture. A pair of divergent legs 38, which constitute resilient biassing means, extend from the valve member 37 and abut the shoulder 33, and on the opposite side of the valve member 37 to the legs 38, there is a central projection 39, which extends through the aperture defined by the seat 35. Additionally, connected to the periphery of the valve member 37 at the same side as the legs are four equidistantly spaced stop elements 41 (see Fig.3). These provide bearing surfaces in sliding contact with the inner surface of the end section 31 and serve to centre the valve structure 36 in the body end section 31, as well as co-operating with the shoulder 33 to limit retraction of the valve member 37 against the resilience of the legs 38, when pressure is applied to the projection 39.

The cup-shaped member 34 of the second connector 30 is adapted in internal dimension to be a sliding sealing fit on the outer surface of the narrow diameter outflow portion 17 of the first connector 10 as is apparent from the juxtaposition of these connectors in Fig.1.

When the two connectors 10,30 are engaged (Fig.4) the outlet passage 17 and the cup-shaped member 34 are in fluid tight relationship. Secure interconnection between the two connectors is ensured by barbed fingers 42 provided on the second connector 30 engaging over corresponding lugs 43 on the first connector 10, as shown in Fig.5. This prevents inadvertent disengagement of the connectors, and also ensures that they are firmly abutted, and therefore in fluid tight engagement and with both valves open.

As will be best appreciated from Fig.4, as the two connectors 10, 30 are brought together and the end portion 17 enters the cup-shaped member 34, the projection 39 of the valve member 37 of the second connector 30 contacts the cruciform actuator portion 23 and thereby urges the valve member 22 of the first connector 10 against the resilient force of the legs 21, away from the valve seat 16, thus opening up the first connector 10 for throughflow of liquid from any container attached to the connection portion 11. Displacement of the valve member 22 is, however, restricted by abutment against the end of the projecting abutment portion 20. When this occurs, the projection 39 cannot exert further effective forward pressure and therefore serves to push the valve member 37 of the second connector 30 away from its valve seat 35, contrary to the resilient force of the legs 38. In this case displacement of the valve member 37 is limited by the stop elements 41, which abut the shoulder 33, and also limit the degree of flexure of the legs.

Thus, upon connection of the two connectors 10, 30, both valves are reliably opened one after the other, by use of the abovedescribed unitary valve structures 18,36 which act to urge each other away from respective valve seats 16,35. Upon disconnection, the resilient legs 21, 38 of the respective valve structures reliably urge the respective valve member 27,37 back against their valve seats 16,35 to close off the apertures.

### Other Modes of Carrying out Invention

The foregoing is, of course, illustrative and not limitative. Many variations in configuration of the connector bodies and valve structures are possible within the scope of the invention.

It has already been mentioned that the first connector 10 could be used on its own with a tool or special fitting for opening the valve by displacement of the actuator portion 23. However, even when a two part coupling is used, the first connector as illustrated could be connectable to a different form of second connector, so long as the latter is of suitable dimension for fluid tight engagement and has means for displacement of the actuator 23. Furthermore, it is not essential that the first connector be connected to the liquid supply container and the second connector be connected to the liquid receptor: they could equally well be the other way around.

More specifically, the respective structures need not be moulded in one piece, but is is clearly desirable to do so, if possible, to minimise the complexity of manufacture. In the case of the first connector integral moulding of the valve structure will be especially important so as to minimise the production cost in cases where it is to be connected to and form part of a disposable container. In the case of the second connector, where that is to be a permanent fitment, e.g. on a drinks dispensing machine, low cost is not so critical and the valve structure could then include a metal spring or the like as biassing means.

Also, as regards the biassing means, in modifications of the illustrated embodiment a larger number of resilient legs or strips could be provided, or in the case of the second connector slotted conical biassing means could be provided. For the actuator portion of the first connector, any shape which includes spaced edge portions in sliding contact with the surface of the outward flow passage, such as a tripartite or star-shaped cross-section could be equally effective to the criciform shape for centering while allowing fluid passage. Other less favourable forms of actuator are also possible.

Also, quite clearly, the first connector could be modified so that its connection portion 11 is substantially axially aligned with its outflow passage, or at any other relative orientation different to that illustrated.

It is also important to mention that the connectors could readily be adpated for interfitment in the opposite manner, with the first connector outlet fitting over the second connector inlet instead of vice versa, and also that the interengagement portions could be modified for screw threaded interconnection without affecting the essential functioning of the valves which serve for mutual opening.

Naturally, the coupling arrangement can be used in respect of any liquids, (or indeed any fluids), not just beverages, although it is especially suited to same as the connectors are both hygenically sealable and can readily be cleaned and sterilised.

## Claims

1. A connector (10) for a container for dispensing fluid therefrom comprising a body having a portion (11) adapted for connection to the container, a portion defining an outward flow passage (17), and a valve seat (16), and a valve member (22) resiliently urged towards the valve seat (16) by integral resilient biassing means (21) to prevent fluid flow from the container via the outward flow passage (17), the valve member (22) also having an actuator portion (23) projecting through the valve seat (16) whereby the valve member can be displaced from the valve seat against the action of the integral biassing means (21) to permit fluid flow therethrough, stop means (20) being provided to limit the displacement of the valve member (22) from the valve seat (16), characterised in that the valve member (22) is part of an integrally moulded one piece plastic structure (18) which includes mounting means (19) as well as the resilient biassing means (21), the actuator portion (23) and the stop means (20).

2. A connector according to claim 1 wherein the integral resilient biassing means (21) of the valve member comprise a plurality of resilient legs or strips.

3. A connector according to claim 1 or 2 wherein the integral stop means (20) of the valve member comprises an abutment portion which is surrounded or flanked by the integral resilient biassing means (21).

4. A connector according to any preceding claim wherein the integral actuator portion (23) of the valve member (22) consists of a projection having spaced edge portions in sliding contact with the surface of the outward flow passage.

5. A connector according to claim 4 wherein the integral actuator portion (23) of the valve member (22) consists of a projection which is cruciform in cross-section.

6. A disconnectable coupling arrangement comprising a connector as claimed in any preceding claim wherein said portion defining an outward flow passage (17) is complementary to a portion (31), defining an inflow passage, of a second connector (30), said second connector also comprising a body, of which the aforesaid inflow passage portion forms part, including a valve seat (35), and a valve member (37) resiliently urged towards the valve seat in a direction to prevent fluid flow out of said body, said valve member (37) having a projection (39) which extends through the valve seat (35) when the member is closed against the seat and which is so arranged that upon engagement of said second connector (30) with the outward flow passage (17) of the first connector (10) it engages the actuator portion (23) of the valve member (22) of the first connector and thereby lifts the valve member (22;37)of both connectors from their valve seats (16;35).

7. A coupling arrangement according to claim 6 wherein the valve member (37) of the second connector (30) is resiliently urged towards its valve by integral spring biassing means (38).

8. A coupling arrangement according to claim 7 wherein the integral spring biassing means (38) of the second connector (30) comprise a plurality of resilient legs or strips.

9. A coupling arrangement according to claim 7 or 8 wherein the valve member (37) of the second connector (30) is part of an integrally moulded plastics structure (36) which includes the projection (39) and the spring biassing means (38).

10. A coupling arrangement according to claim 9 wherein the valve structure (36) of the second connector (30) also includes integral stop means (41) to limit displacement of the valve member (37) from the seat (35) of the second connector.

11. A coupling arrangement according to claim 10 wherein the stop means (41) comprises a plurality of spaced elements, each in sliding contact with the surface of the inflow passage (31) of the second connector.

12. A coupling arrangement according to any of claims 6 to 11 wherein the first and second connectors (10,30) are so constructed that upon engagement they form a sliding fluid tight seal.

13. A coupling arrangement according to any of claims 6 to 12 wherein the first and second connectors (10, 30) are provided with positive engagement means (42, 43)defining an engagement position wherein both said valve members will be opened to allow fluid flow through the first connector and into the second connector.

## Patentansprüche

1. Verbinder (10) für einen Behälter zum Ausgeben von Fluid daraus, umfassend einen Körper mit einem Abschnitt (11), der zum Anschließen an den Behälter ausgebildet ist, einen Abschnitt, der einen Ausströmdurchgang (17) begrenzt, und einen Ventilsitz (16) sowie ein Ventilelement (22), das durch eine einstückige elastische Vorspanneinrichtung (21) elastisch gegen den Ventilsitz (16) gedrückt wird, um zu verhindern, daß Fluid über den Ausströmdurchgang (17) aus dem Behälter strömt, wobei das Ventilelement (22) auch einen Betätigungsteil (23) aufweist, der durch den Ventilsitz (16) hindurch ragt, wodurch das Ventilelement gegen die Wirkung der einstückigen Vorspanneinrichtung (21) vom Ventilsitz weg verlagert werden kann, sodaß das Hindurchströmen von Fluid zugelassen wird, wobei eine Stoppeinrichtung (20) vorgesehen ist, um die Verlagerung des Ventilelements (22) vom Ventilsitz (16) weg zu begrenzen, dadurch gekennzeichnet, daß das Ventilelement (22) Teil einer einstückig geformten einteiligen Kunststoffstruktur (18) ist, die eine Montageeinrichtung (19) sowie die elastische Vorspanneinrichtung (21), den Betätigungsteil (23) und die Anschlageinrichtung (20) umfaßt.

2. Verbinder nach Anspruch 1, worin die einstückige elastische Vorspanneinrichtung (21) des Ventilelements eine Vielzahl elastischer Beine oder Streifen umfaßt.

3. Verbinder nach Anspruch 1 oder 2, worin die einstückige Stoppeinrichtung (20) des Ventilelements einen Anschlagabschnitt umfaßt, der von der einstückigen elastischen Vorspanneinrichtung (21) umgeben oder flankiert ist.

4. Verbinder nach einem der vorhergehenden Ansprüche, worin der einstückige Betätigungsteil (23) des Ventilelements (22) aus einem Vorsprung besteht, der beabstandete Randabschnitte aufweist, die sich in Gleitkontakt mit der Oberfläche des Ausströmdurchgangs befinden.

5. Verbinder nach Anspruch 4, worin der einstückige Betätigungsteil (23) des Ventilelements (22) aus einem im Querschnitt kreuzförmigen Vorsprung besteht.

6. Lösbare Kupplungsanordnung, einen Verbinder nach einem der vorhergehenden Ansprüche umfassend, worin der genannte einen Ausströmdurchgang (17) begrenzende Abschnitt zu einem einen Einströmdurchgang begrenzenden Abschnitt (31) eines zweiten Verbinders (30) komplementär ist, wobei der genannte zweite Verbinder ebenfalls einen Körper umfaßt, von dem der obengenannte Einströmdurchgangsabschnitt einen Teil bildet, umfassend einen Ventilsitz (35) und ein Ventilelement (37), das elastisch in eine Richtung zum Ventilsitz gedrückt wird, um ein Ausströmen von Fluid aus dem genannten Körper zu verhindern, wobei das genannte Ventilelement (37) einen Vorsprung (39) aufweist, der sich durch den Ventilsitz (35) hindurch erstreckt, wenn das Ventilelement gegen den Sitz geschlossen ist, und der so angeordnet ist, daß er beim Ineinandergreifen des genannten zweiten Verbinders (30) mit dem Ausströmdurchgang (17) des ersten Verbinders (10) in den Betätigungsteil (23) des Ventilelements (22) des ersten Verbinders ineinandergreift und dadurch die Ventilelemente (22;37) beider Verbinder aus ihren Ventilsitzen (16;35) hebt.

7. Kupplungsanordnung nach Anspruch 6, worin das Ventilelement (37) des zweiten Verbinders (30) durch eine einstückige Federvorspanneinrichtung (38) elastisch gegen sein Ventil gedrückt wird.

8. Kupplungsanordnung nach Anspruch 7, worin die einstückige Federvorspanneinrichtung (38) des zweiten Verbinders (30) eine Vielzahl elastischer Beine oder Streifen umfaßt.

9. Kupplungsanordnung nach Anspruch 7 oder 8, worin das Ventilelement (37) des zweiten Verbinders (30) Teil einer einstückig geformten Kunststoffstruktur (36) ist, die den Vorsprung (39) und die Federvorspanneinrichtung (38) umfaßt.

10. Kupplungsanordnung nach Anspruch 9, worin die Ventilanordnung (36) des zweiten Verbinders (30) auch eine einstückige Stoppeinrichtung (41) umfaßt, um die Verlagerung des Ventilelements (37) vom Sitz (35) des zweiten Verbinders weg zu begrenzen.

11. Kupplungsanordnung nach Anspruch 10, worin die Stoppeinrichtung (41) eine Vielzahl beabstandeter Elemente umfaßt, von denen sich jedes in Gleitkontakt mit der Oberfläche des Einströmdurchganges (31) des zweiten Verbinders befindet.

12. Kupplungsanordnung nach einem der Ansprüche 6 bis 11, worin der erste und der zweite Verbinder (10,30) so konstruiert sind, daß sie beim Ineinandergreifen eine fluiddichte Gleitdichtung bilden.

13. Kupplungsanordnung nach einem der Ansprüche 6 bis 12, worin der erste und der zweite Verbinder (10,30) mit einer Einrichtung zum formschlüssigen Eingriff (42,43) versehen sind, die eine Eingreifposition definiert, in der beide genannten Ventilelemente geöffnet werden, um das Strömen von Fluid durch den ersten Verbinder hindurch und in den zweiten Verbinder zuzulassen.

## Revendications

1. Raccord (10) pour un récipient pour distribuer du fluide à partir de celui-ci comprenant un corps présentant une portion (11) conçue pour être connectée au récipient, une portion définissant un passage d'écoulement vers l'extérieur (17), et un siège de vanne (16), et un élément de vanne (22) sollicité élastiquement vers le siège de vanne (16) par un moyen de sollicitation élastique intégrale (21) pour empêcher un écoulement de fluide du récipient via le passage d'écoulement vers l'extérieur (17), l'élément de vanne (22) présentant également une portion d'actionnement (23) faisant saillie à travers le siège de vanne (16), par quoi l'élément de vanne peut être déplacé du siège de vanne contre l'action du moyen de sollicitation intégral (21) pour permettre un passage de fluide à travers celui-ci, un moyen formant butée (20) étant prévu pour limiter le déplacement de l'élément de vanne (22) du siège de vanne (16), caractérisé en ce que l'élément de vanne (22) fait partie d'une structure en plastique en une pièce moulée intégralement (18) qui comprend un moyen de montage (19) ainsi que le moyen de sollicitation élastique (21), la portion d'actionnement (23) et le moyen formant butée (20).

2. Raccord selon la revendication 1, dans lequel le moyen de sollicitation élastique intégral (21) de l'élément de vanne comprend une pluralité de pattes ou de bandes élastiques.

3. Raccord selon la revendication 1 ou 2, dans lequel le moyen formant butée venu de matière (20) de l'élément de vanne comprend une portion de butée qui est entourée par ou flanquée du moyen de sollicitation élastique intégral (21).

4. Raccord selon l'une des revendications précédentes, dans lequel la portion d'actionnement intégrale (23) de l'élément de vanne (22) est constituée d'une saillie présentant des portions de bord espacées en contact de coulissement avec la surface du passage d'écoulement vers l'extérieur.

5. Raccord selon la revendication 4, dans lequel la portion d'actionnement intégrale (23) de l'élément de vanne (22) est constituée d'une saillie qui a une forme de croix en section transversale.

6. Agencement d'accouplement déconnectable comprenant un raccord tel que revendiqué dans l'une des revendications précédentes, dans lequel ladite portion définissant un passage d'écoulement vers l'extérieur (17) est complémentaire à une portion (31) définissant un passage d'entrée d'un deuxième raccord (30), ledit deuxième raccord comprenant également un corps dont la portion de passage d'entrée précitée fait partie, comprenant un siège de vanne (35), et un élément de vanne (37) sollicité élastiquement vers le siège de vanne suivant une direction pour empêcher un écoulement de fluide hors dudit corps, ledit élément de vanne (37) présentant une saillie (39) qui s'étend à travers le siège de vanne (35) lorsque l'élément est fermé contre le siège et qui est agencée de façon que lors de la mise en prise dudit deuxième raccord (30) avec le passage d'écoulement vers l'extérieur (17) du premier raccord (10), elle vient en prise avec la portion d'actionnement (23) de l'élément de vanne (22) du premier raccord et soulève ainsi l'élément de vanne (22 ; 37) des deux raccords de leurs sièges de vanne (16 ; 35).

7. Agencement d'accouplement selon la revendication 6, dans lequel l'élément de vanne (37) du deuxième raccord (30) est sollicité élastiquement vers sa vanne par un moyen de sollicitation à ressorts intégral (38).

8. Agencement d'accouplement selon la revendication 7, dans lequel le moyen de sollicitation à ressorts intégral (38) du deuxième raccord (30) comprend une pluralité de pattes ou de bandes élastiques.

9. Agencement d'accouplement selon la revendication 7 ou 8, dans lequel l'élément de vanne (37) du deuxième raccord (30) fait partie d'une structure en plastique moulée intégralement (36) qui comprend la saillie (39) et le moyen de sollicitation à ressort (38).

10. Agencement d'accouplement selon la revendication 9, dans lequel la structure de vanne (36) du deuxième raccord (30) comprend également un moyen formant butée venu de matière (41) pour limiter le déplacement de l'élément de vanne (37) du siège (35) du deuxième raccord.

11. Agencement d'accouplement selon la revendication 10, dans lequel le moyen formant butée (41) comprend une pluralité d'éléments espacés, chacun en contact de coulissement avec la surface du passage d'entrée (31) du deuxième raccord.

12. Agencement d'accouplement selon l'une des revendications 6 à 11, dans lequel les premier et deuxième raccords (10, 30) sont construits de façon que lors de leur mise en prise ils forment un joint d'étanchéité coulissant étanche au fluide.

13. Agencement d'accouplement selon l'une des revendications 6 à 12, dans lequel les premier et deuxième raccords (10, 30) sont pourvus de moyens d'engagement positifs (42, 43) définissant une position d'engagement dans laquelle les deux desdits éléments de vanne seront passants pour permettre l'écoulement du fluide à travers le premier raccord et dans le deuxième raccord.
